# EUROPEAN PATENT APPLICATION

(11) **EP 4 811 060 A1**
(43) Date of publication of application: **23.09.2026**
(21) Application number: 26165477.6
(22) Date of filing: 17.03.2026
(51) Int. Cl.: G05B 19/418, B65B 1/30, B65D 85/72

(54) **METHOD AND SYSTEM FOR MONITORING AND APPROVING A QUALITY OF A PRODUCT PROVIDED WITH A PRODUCT-PACKAGE**

(30) Priority: 18.03.2025 EP 25164385
(71) Applicant: BASF SE, 67056 Ludwigshafen am Rhein (DE)
(72) Inventor: Malchau, Christian, 67056 Ludwigshafen am Rhein (DE); Kuntz, Andrea, 67056 Ludwigshafen am Rhein (DE); Pelletier, Wolf, 67056 Ludwigshafen am Rhein (DE); Stephan, Oskar, 67056 Ludwigshafen am Rhein (DE); Ruedenauer, Stefan, 67056 Ludwigshafen am Rhein (DE); Bruhns, Stefan, 67056 Ludwigshafen am Rhein (DE)
(74) Representative: Eisenführ Speiser

(57) **Abstract**

The invention relates to a method and system adapted for monitoring and approving a quality of a product provided with a product-package, wherein the product comprises a nutrition-supplementary composition and is provided as a particulate material, and the product-package has a packing comprising foil based packing means with a set of foils and a closure in form of a weldseam at least at one location of the foil based packing means adapted such that the product is contained as a content in the packing. According to the invention the method for monitoring and approving a quality of a product provided with a product-package comprises i.a. the steps of:
- at a determined later period of probe time (t2) after an initial period of service time (t1), approving the gas- and/or humidity-tight containment-property of a twin-packing for a twin-package and providing a test result,
- wherein the test result is correlated (t3) with the quality parameter of the product in that
- in the case the test result approves the gas- and/or humidity-tight containment-property the threshold of a quality parameter of the product are confirmed;
- in the case the test result disapproves the gas- and/or humidity-tight containment-property, the threshold of a quality parameter of the product are disconfirmed.

## Description

### FIELD OF THE INVENTION

The present invention relates to a method and system for monitoring and approving a quality of a product provided with a product-package, wherein the product comprises a nutrition-supplementary composition and is provided as a particulate material. The invention also leads to a respective data processing system and computer program to carry out the method.

Particulate material often is provided in a pouch or bag or the like packing; the packing also can be adapted such that a vacuum packing is guaranteed. To monitor a guaranteed vacuum packing, a vacuum test box for testing a vacuum packaging pouch of general kind is e.g. known from CN208171516 U. Also where the vacuum packing is adapted for a product of nutrition provided with a product-package, a specifically adapted vacuum test box is known from various offers in the market - one of these is referenced in https://www.leak-master.de/.

Generally in the field of food detection, an airtight continuous detection device for an airbag food package is described with CN 102848144 A1. In order to facilitate the subsequent screening of air-packaged food products with low buoyancy due to leaks, the inspection is efficient and can be connected to the air-packaged food delivery line for continuous inspection.

However, that kind of inspection is only related with the packing as such. Furthermore, in case of a deficiency in the packing, a problem arises as to the further consequences because information is only available for the packing as such. Also, the above-mentioned approaches may not serve to inspect packings for nutrition products.

The efforts as to quality and safeguarding a certain quality value margin for a complex product and/or a large volume product demand also for a high-value packing. The respective efforts of inspection for packings should go beyond commonplace measures for packings of usual nutrition products. The consequences of any deficiencies have wide impacts also to the delivery chain.

### SUMMARY OF THE INVENTION

One example of a complex product which is usually delivered in a high volume is a nutrition-supplementary product. One example of a nutrition-supplementary product is a Vitamin A nutrition-supplementary product.

In a respective product bunch of the invention as mentioned in the introduction, the product comprises a nutrition-supplementary composition which is provided as a particulate material, and the product-package has a packing comprising a foil based packing means with a set of foils and a closure in form of a weldseam at least at one location of the foil based packing means adapted such that the product is contained as a content in the packing. The set of foils of the packing means is formed as a composite layered laminate with the weldseam, such that the product is contained as the content in the packing in a gas- and/or humidity-tight manner.

The packing comprises a foil based packing means with a set of foils and a closure in form of a weldseam. This addresses that a content of an agent in the product is set according to a guaranteed quality parameter --in the example this relates to a Vitamin A content in the product. However, in this example --and similar for other nutrition-supplementary compositions-- a stability of the active agent and other relevant ingredients of the nutrition-supplementary composition is a key unsolved issue in the nutrition industry, in particular in the animal nutrition industry.

In the example, getting a respective sufficient Vitamin A level from formulations over applications to the animals is a challenge. One reason thereof is that impacts of heat, humidity or chemicals or the like hazardous environmental conditions may put stress on the beadlets of Vitamin A containing particulate material. These and the like hazardous environmental conditions lead to losses of Vitamin A by several decomposition pathways.

Decomposition in bulk mainly occurs via temperature-dependent formation of Kitols, though this process is comparably slow as compared to degradation induced by humidity. Consequently, safeguarding Vitamin A from decomposition by humidity is a key problem to be solved. Similar for other nutrition-supplementary compositions, safeguarding active agents and other relevant ingredients from decomposition by humidity is a key problem to be solved.

Accordingly, there is a demand for an improvement in a method and a system of the above mentioned kind for monitoring and approving a quality of the product provided with an aforementioned rather complex product-package, wherein the product comprises a nutrition-supplementary composition.

This is where the invention comes in, the objective thereof is to provide method and a system of the above-mentioned kind for monitoring and approving a quality of a product provided with a product-package, wherein the product comprises a nutrition-supplementary composition and is provided as a particulate material.

### SUPPORT OF MAIN CLAIMS

The object is achieved with regard to the method with the subject-matter of claim 1.

Therein, as mentioned in the introduction, the invention starts from a method for monitoring and approving a quality of a product provided with a product-package, wherein the product comprises a nutrition-supplementary composition and is provided as a particulate material,
- wherein the product-package has a packing comprising foil based packing means with a set of foils and a closure in form of a weldseam at least at one location of the foil based packing means adapted such that the product is contained as a content in the packing,
- wherein the set of foils of the packing means is formed as a composite layered laminate with the weld seam, such that the product is contained as the content in the packing in a gas- and/or humidity-tight manner.

According to the invention, the method for monitoring and approving a quality of a product provided with a product-package comprises the steps of:
(i) at a service time (t1), providing the product in the product-package with at least a threshold of a quality parameter assigned to the functionally active portion of the nutrition-supplementary composition in the product at a determined initial period assigned to the service time of the product-package,
(ii) at the service time, providing the packing of the product in the product-package with certified set of quality features at the determined initial period assigned to the service time of the product-package,
(iii) at the initial period assigned to the service time, providing a twin-packing with a twin-weld seam for a twin-package each of the same and/or corresponding kind as the packing with the weld seam of the product-package
(iv) at a determined later period of probe time after the initial period of service time, approving the gas- and/or humidity-tight containment-property of the twin-packing for the twin-package and providing a test result,
(v) wherein the test result is correlated with the quality parameter of the product in that
   - in the case the test result approves the gas- and/or humidity-tight containment-property the threshold of a quality parameter of the product are confirmed;
   - in the case the test result disapproves the gas- and/or humidity-tight containment-property, the threshold of a quality parameter of the product are disconfirmed.

The object is achieved with regard to the system with the subject matter of claim 11.

Therein, as mentioned in the introduction, the invention starts from a system for monitoring and approving according to a method of one of the previous claims a quality of a product provided with a product-package, wherein the product comprises a nutrition-supplementary composition and is provided as a particulate material,
- wherein the product-package has a packing comprising foil based packing means with a set of foils and a closure in form of a weldseam at least at one location of the foil based packing means adapted such that the product is contained as a content in the packing,
- wherein the set of foils of the packing means is formed as a composite layered laminate with the weld seam, such that the product is contained as the content in the packing in a gas- and/or humidity-tight manner.

According to the invention the system for monitoring and approving a quality of a product provided with a product-package comprises:
(i) First timing means adapted to backup the service time and the initial period assigned to the service time (t1),
(ii) - Second timing means adapted to backup the probe time and the period of probe time (t2),
(iii) - a twin-packing with a twin-weld seam for a twin-package each of the same and/or corresponding kind as the packing with the weld seam of the product-package
(iv) - test-apparatus adapted to approving the gas- and/or humidity-tight containment-property of the twin-packing for the twin-package and providing a test result,
(v) correlation-means adapted to safe a correlation of the test result with the quality parameter of the product, and an indicator logic unit adapted in that
   - in the case the test result approves the gas- and/or humidity-tight containment-property the threshold of a quality parameter of the product are confirmed;
   - in the case the test result disapproves the gas- and/or humidity-tight containment-property, the threshold of a quality parameter of the product are disconfirmed.

In the claims, a product-package defines the combination of a product content in a packing of the product-package as has been defined in the claims. The method of monitoring and approving a quality of the product provided with the product-package thus is meant to be adapted in that, as claimed, by approving the gas- and/or humidity-tight containment property of a twin-packing and providing a test result thereof a correlation based statement with regard to the quality parameter of the product can safely be made on a qualified basis. The qualified basis is given in a kind of correlation assessment which is approved for at least the initial period assigned to the service time of the product-package.

In other words, the main gist of the invention is given in that by monitoring the twin-packing as such a qualified approval as to the quality of the product provided with the product-package can be given. Said approval in a preferred way also is adapted to the actual situation of providing the packing and/or the process of packing of the product in the product-package.

Thus, the instantly claimed method and system is not only related with a mere monitoring of the product-package. The instantly claimed method and system extends beyond the monitoring of the twin-packing assigned to the product-package; the claimed method and system is adapted to provide a qualified approval as to the quality of the product provided with the product-package. The qualified approval can be made such that guaranteed quality parameters assigned to the functionally active portion of the nutrition-supplementary composition in the product can be ascertained and approved any time throughout the shelf-life of the product-package, this is in a period of time between service time and delivery time of the product-package.

With regard to the mentioned quality of the product as such, the invention starts from recognizing that a quality parameter assigned to a functionally active portion of the nutrition-supplementary composition in the product like.

For instance, the active agents and other relevant ingredients of the nutrition-supplementary composition are understood to constitute a functionally active portion of the nutrition-supplementary composition - such functionally active portion may undergo a development of degrading.

Thus, it is problematic when a quality parameter of the functionally active portion of the nutrition-supplementary composition has been guaranteed by the provider and during the shelf-life of the product such quality parameter becomes suboptimal in that it degrades below a guaranteed threshold. Low values below a guaranteed threshold of such quality parameters are, however, not to be neglected as they may correlate in a non-linear way with the functional activity of said active agent or ingredient. In other words, even though the provider at the beginning of shelf-life might have guaranteed such quality parameter for the product, after shelf-life of the product this might not be the case anymore.

The invention further surprisingly recognized that a product-package, which fulfil conditions of gas- and/or humidity-tight aspects with regard to the packing have been found to be safe candidates where the product quality parameters of the product in the packing can safely be guaranteed.

Even more, when applying the method of the invention it can be guaranteed that the quality parameters which have been guaranteed by the provider at the service time also can be guaranteed throughout the shelf-life; such guarantee statement can already be based on the knowledge that the packing of the product-package has a gas- and/or humidity-tight containment property above a certain threshold.

Thus, the instant invention correlates the quality parameters of the packing with the quality parameters of the product. Therefore, according to the invention, it has been recognized to be sufficient for monitoring and approving a quality of the product to monitor the twin-packing of a twin-package as has been claimed.

The correlation can be found and provided based on measurements to selected packings or product-packages as such or --alternative or additionally-- for the corresponding twin-packing or twin product-packages in a laboratory.

This measure has the advantage that the monitoring process as such is separated from the production and delivery chain for the product-package and still nevertheless the monitoring process is highly significant for the production chain.

Furthermore, the concept of the invention implements an approval of the gas- and/or humidity-tight containment property of the twin-packing for the twin-package as a measurement which is by way easier to perform than a measurement to the functionally active portion of the nutrition-supplementary composition in the product as such. Thus, the instantly claimed concept of the invention becomes practicable and can be assessed to a product chain in a comparatively easy way.

At last, the concept of the invention approves features of the product-package related with the packing which can be considered as a source of potential degradation of the functionally active portion of the nutrition-supplementary composition.

So to speak, the source of degradation --even though the packing might have qualified origin and originally can be considered as tight-- is to be considered in that the packing means with the set of foils and the closure in form of the weld-seam are rather complex. The impacts thereon might already be constituted in fissures or cracks to one of the foils like to a barrier layer or the like or other micro damages which are not obvious but only in a measurement to the packing. In other words, whereas the deficiencies of the packing as a source of degradation can be determined by way of the invention, it might be even more sophisticated to measure deficiencies to the product.

Thus, the instant invention takes advantage from a relevant and easy to assess measurement to the packing which is applied in order to state the quality parameter of the product based on the test result which is correlated with the quality parameter of the product.

In summary, according to the concept of the invention, based on the correlation between the quality parameters of the product and a condition of the gas- and/or humidity-tight containment property, a statement about the quality parameter of the product --like the content of functionally active portion of the nutrition-supplementary composition-- can be safely made.

Furthermore, the invention guarantees that said assessment is accurate and up to date by way of assessing the twin-packing of the twin-package. The assessment can be executed independently of the production process, such that the production process continues whilst the assessment takes place in a laboratory.

The instant wording of twin-packing and twin-package, as claimed, defines a subject-matter which is of the same kind as the packing of the product or the product-package as such, which is meant by the wording "twin". Thus, the assessment of a twin-matter in the meaning of the invention has the same validity and significance as an assessment of the product or product packing as such.

According to the concept of the invention, the core of a statement relies in a value of correlation between the content or agent or other kind of quality parameter of the product on the one hand and an approval value for gas- and/or humidity-tight containment property on the other hand which correlation value can be provided in an ongoing or more or less continuous process parallel to the production process.

Unexpectedly, it has been found that the combination of a specific packaging material, together with a strict protocol to seal off the packaging, leads to unexpectedly high stability retention of the active agents and other relevant ingredients of the nutrition-supplementary composition. In the above example the inventive method led to an unexpectedly high retention of e.g. Vitamin A or the like functionally active portion of the nutrition-supplementary composition.

The inventive measures thus allow to guarantee a shelf life even for a complex product comprising a nutrition-supplementary composition provided as a particulate material in a sophisticated packing of a packing bunch as claimed and explained in the introduction of the invention.

The instant solution has been found inter alia by research for different packaging materials, identifying crucial sealing properties and/or investigating test system for bags to assess sealing.

### SUPPORT OF DEPENDENT CLAIMS

Advantageous developments of the invention are hereinafter found and described in accordance with the dependent claims and indicate in detail advantageous options and developments, which can be realized within the concept of the invention described above and within the scope of the object of the invention as well as with regard to further advantages. In the following, preferred developments of the process and plant arrangement will be described.

In a preferred development the product consists of the nutrition-supplementary composition which is provided as a bulk of particulate material of beadlets, globules or pellets or the like particles. Particulate material is a preferred form of high volume product.

Additionally or alternatively the packing consists of the foil based packing means with the closure in form of the weldseam, wherein the product is contained in the packing. A foil based packing means with the closure in form of the weldseam is adapted to be easy in handling during the production process and safely fulfills repective quality margins.

In a preferred development the composite layered laminate comprises at least a metal laminate layer and/or at least a plastic or polymer laminate layer; i.e. either only one or more metal laminate layers or only one or more plastic or polymer laminate layers or a combination of both. To form a true composite a combination of layers of the laminate may comprise both, one or more metal laminate layers and one or more plastic or polymer laminate layers.

The weldseam is preferably effected with at least the plastic or polymer laminate layer. Preferably the metal laminate layer forms a barrier layer.

Preferably the composite layered laminate comprises at least a metal laminate layer and at least a plastic or polymer laminate layer wherein the weldseam is effected with at least the plastic laminate layer and the metal laminate layer forms a barrier layer.lln a preferred development the metal laminate layer is an aluminum layer.

In a preferred first variant of a development the plastic laminate layer is a PE-layer, in particular a LD PE-layer and/or a LLD PE-layer. A preferred development regards the step in that at the initial period assigned to the service time, a twin-packing with a twin-weld seam for a twin-package each of the same and/or corresponding kind as the packing with the weld seam of the product-package is provided. In the preferred development not only the twin-packing with a twin-weld seam for a twin-package is provided.

In the preferred development it is suggested, that
- at the initial period assigned to the service time, a probe-version of the product-package at the service time is provided, wherein the probe-version of the product-package constitutes a twin-package of the product-package, the twin-package consisting of a twin-packing with a twin-weld seam each of the same and/or corresponding kind as the packing with the weld seam of the product-package such that the product is contained as the content in the twin-packing of the twin-package in a gas- and/or humidity-tight manner.

An initial period is considered to be related with the service time, i.e. the initial period extends from a point of time on or after the service time to a point of time not too far thereafter - so to say in an initial period depending on the specific supplier's situation, it is assumed that the conditions and characteristics of the product and packing are the same for in the bunch produced and the twin-package.

Also in addition in that preferred development it is suggested that
- at a determined later period of probe time after the initial period of service time, approving the gas- and/or humidity-tight containment-property of the product in the twin-packing of the twin-package and providing a test result.

A period of probe time is considered to be set well after the service time, i.e. the initial period extends from a point of time on or after the service time to a point of time not too far thereafter - so to say in an probe time reflects some point of time during shelf life of the product depending on the provider's situation.

In a preferred development at a determined later period of probe time after the initial period of service time, the gas- and/or humidity-tight containment of the product in the twin-packing of the twin-package is approved and a test result is provided. In particular therein by approving the gas- and/or humidity-tight containment of the product in the twin-packing of the twin-package and providing a test result is executed by conducting a leakage-test on the twin-package and providing a leakage-test result.

In particular therein the period of probe time is set during a shelf-life and/or period assigned to a delivery time of the product-package.

In a preferred development the test result is also correlated with the quality parameter of the product and/or the quality features of the packing, wherein
- in the case the test result approves the gas- and/or humidity-tight containment also the certified set of quality features of the packing are confirmed;
- in the case the test result disapproves the gas- and/or humidity-tight containment, the threshold of a quality parameter of the product are disconfirmed, also the certified set of quality features of the packing are disconfirmed.

In particular therein the test result is correlated with the quality parameter of the product in that a look-up table is provided comprising an assignment of
- a threshold of a quality parameter of the product in terms of an amount (I.E.) of a functionally active portion of the nutrition-supplementary composition in the product, and
- a containment-property in terms of a tightness pressure and/or stress-resilience parameter (e.g. a value relating a probe force/length at the packing) of the packing.

In particular therein the twin-package is a miniaturized bunch, which is produced by proportional downscaling of the threshold of a quality parameter of the product-package. Downscaling of the threshold of a quality parameter of the product-package as mentioned herein in particular is meant to be related with the aforementioned threshold of a quality parameter of the product in terms of an amount (I.E.). In other words, the twin-package is a miniaturized bunch and the mere overall amount (I.E.) of a functionally active portion of the nutrition-supplementary composition in the twin-package accordingly can be considered by proportional downscaling the overall amount (I.E.) from the product-package.

With regard to the system in a preferred development the system comprises
- a defect-packing and/or a defect-weld seam for a defect-bunch each of the same and/or corresponding kind as the packing with the weld seam of the product-package and further comprising a predetermined defect means adapted to establish comparative and/or normative example to the twin-package.

Preferably the test-apparatus is a leakage testing device and/or a stress/strength testing device.

In a further developed and specifically preferred aspect the object is achieved with regard to the method with the subject-matter of a further method. Said further method for monitoring and approving a quality of a product provided with a product-package basically corresponds to the method as claimed in claim 1 and as an option preferably is developed by the features as claimed in claim 8.

Therein, with said further developed method, the product comprises a nutrition-supplementary composition and is provided as a particulate material,
- wherein the product-package has a packing comprising foil based packing means with a set of foils and a closure in form of a weldseam at least at one location of the foil based packing means adapted such that the product is contained as a content in the packing,
- wherein the set of foils of the packing means is formed as a composite layered laminate with the weld seam, such that the product is contained as the content in the packing in a gas- and/or humidity-tight manner, and
- said method for monitoring and approving a quality of a product provided with a product-package comprises the steps of:
   (i) at a service time, providing the product in the product-package with at least a threshold of a quality parameter assigned to the functionally active portion of the nutrition-supplementary composition in the product at a determined initial period assigned to the service time of the product-package,
   (ii) at the service time, providing the packing of the product in the product-package with certified set of quality features at the determined initial period assigned to the service time of the product-package,
   (iii) at the initial period assigned to the service time, providing a twin-packing with a twin-weld seam for a twin-package each of the same and/or corresponding kind as the packing with the weld seam of the product-package,
   (iv) at a determined later period of probe time after the initial period of service time, approving the gas- and/or humidity-tight containment-property of the twin-packing for the twin-package and providing a test result,
   (v) wherein the test result is correlated with the quality parameter of the product, optionally also with the quality features of the packing, in that
      - in the case the test result approves the gas- and/or humidity-tight containment-property, the threshold of a quality parameter of the product are confirmed, optionally also the certified set of quality features of the packing are confirmed; and/or
      - in the case the test result disapproves the gas- and/or humidity-tight containment-property, the threshold of a quality parameter of the product are disconfirmed, optionally also the certified set of quality features of the packing are disconfirmed.

The above mentioned first case, wherein the test result approves the gas- and/or humidity-tight containment-property, and the above mentioned second case, wherein the test result disapproves the gas- and/or humidity-tight containment-property, can be used with correlating the test result with the quality parameter of the product alone or in combination.

It is already of advantage that correlating the test result with the quality parameter of the product is available in that in the case the test result approves the gas- and/or humidity-tight containment-property, the threshold of a quality parameter of the product are confirmed, optionally also the certified set of quality features of the packing are confirmed. According to the concept of the invention it is preferably sufficient in that the test result approves the gas- and/or humidity-tight containment-property and the threshold of a quality parameter of the product are confirmed, optionally also the certified set of quality features of the packing are confirmed. In that case it may not be necessary to consider to disapprove the gas- and/or humidity-tight containment-property or disconfirm the threshold of a quality parameter of the product, optionally also to disconfirm the certified set of quality features of the packing.

Alternatively it can of advantage that correlating the test result with the quality parameter of the product is available in that in the case the test result disapproves the gas- and/or humidity-tight containment-property, the threshold of a quality parameter of the product are disconfirmed, optionally also the certified set of quality features of the packing are disconfirmed.

Also alternatively, the above mentioned first case the test result approves the gas- and/or humidity-tight containment-property and the above mentioned second case the test result disapproves the gas- and/or humidity-tight containment-property can be used with correlating the test result with the quality parameter of the product in combination.

In a further development the above mentioned developed method may preferably further comprise the features as claimed in one of claims 2 to 7 or one of claims 9 and 10.

In a still further developed and specifically preferred aspect the object is achieved with regard to the method with a subject-matter of a still further method. Said still further method is specifically adapted for preparing, in particular providing, a quality approved product-package. In particular said still further method is developed as further claimed with the features as claimed in claim 8.

Therein, with said still further developed method the product comprises a nutrition-supplementary composition,
- wherein the product-package has a packing comprising foil based packing means with a set of foils and a closure in form of a weld seam at least at least at one location of the foil based packing means adapted such that the product is contained as a content in the packing,
- wherein the set of foils of the packing means is formed as a composite layered laminate with the weld seam, such that the product is contained as the content in the packing in a gas- and/or humidity-tight manner, and the method comprises:
   (a) preparing, in particular providing, the product-package by containing the product as a content in the packing;
   (b) containing the product as a content in the packing in gas- and/or humidity-tight manner; and
      (i) at a service time, providing the product in the product-package with at least a threshold of a quality parameter assigned to the functionally active portion of the nutrition-supplementary composition in the product at a determined initial period assigned to the service time of the product-package,
      (ii) at the service time, providing the packing of the product in the product-package with certified set of quality features at the determined initial period assigned to the service time of the product package,
      (iii) at the initial period assigned to the service time, providing a twin-package with a twin-weld seam for a twin-package each of the same and/or corresponding kind as the packing with the weld seam of the product-package,
      (iv) at a determined later period of probe time after the initial period of service time, approving the gas- and/or humidity-tight containment-property of the twin-packing for the twin-package and providing a test result,
      (v) correlating the test result with the quality parameter of the product, optionally also with the quality features of the packing, and
approving the gas and/or humidity-tight containment-property such that the threshold of a quality parameter of the product is confirmed, optionally also the certified set of quality features of the packing are confirmed, to obtain the quality approved product-package comprising the nutrition-supplementary composition.

In a further development the above mentioned developed method may preferably further comprise the features as claimed in one of claims 2 to 7 or one of claims 9 and 10.

In an even still further developed and specifically preferred aspect the object is achieved with regard to the method with the subject-matter of an even still further developed method of claim 14.

Said even still further developed method is specifically adapted for preparing a quality approved product-package, wherein the product comprises a nutrition-supplementary composition,
- wherein the product-package has a packing comprising foil based packing means with a set of foils and a closure in form of a weld seam at least at least at one location of the foil based packing means adapted such that the product is contained as a content in the packing,
- wherein the set of foils of the packing means is formed as a composite layered laminate with the weld seam, such that the product is contained as the content in the packing in a gas- and/or humidity-tight manner,
   the method comprises:
   (i) preparing the product-package by wrapping the product with the set of foils;
   (ii) welding the set of foils;
   (iii) at a service time, providing the product in the product-package with at least a threshold of a quality parameter assigned to the functionally active portion of the nutrition-supplementary composition in the product at a determined initial period assigned to the service time of the product-package,
   (iv) at the service time, providing the packing of the product in the product-package with certified set of quality features at the determined initial period assigned to the service time of the product package,
   (v) at the initial period assigned to the service time, providing a twin-package with a twin-weld seam for a twin-package each of the same and/or corresponding kind as the packing with the weld seam of the product-package,
   (vi) at a determined later period of probe time after the initial period of service time, approving the gas- and/or humidity-tight containment-property of the twin-packing for the twin-package and providing a test result,
   (vii) correlating the test result with the quality parameter of the product and approving the gas and/or humidity-tight containment-property when the threshold of a quality parameter of the product is confirmed, to obtain the quality approved product-package comprising a nutrition-supplementary composition.

In a further development the above mentioned even still further developed method may preferably further comprise the features as claimed in one of claims 2 to 10.

The invention also leads to a data processing system comprising means for carrying out at least the steps (i) to (v) of the method of claim 1.

A data processing system preferably is for use in the method of one of the claims 1 to 10 or the method of claim14 and/or as being part of the system of one of the claims 11 to 13, the data processing system comprising means for carrying out at least the step (v) of the method of claim 1 or at least the step (vii) of the method of claim 14.

In particular said means is a correlation-means adapted to safe a correlation of the test result with the quality parameter of the product, and an indicator logic unit adapted in that
- in the case the test result approves the gas- and/or humidity-tight containment-property the threshold of a quality parameter of the product are confirmed; and/or
- in the case the test result disapproves the gas- and/or humidity-tight containment-property, the threshold of a quality parameter of the product are disconfirmed.

The invention also leads to a computer program comprising instructions which, when the program is executed by a computer, cause the computer to carry out at least the steps (i) to (v) of the method of claim 1.

The computer program preferably is for use in the method of one of the claims 1 to 10 or the method of claim 14 and/or as being part of the system of one of the claims 11 to 13, the computer program comprising instructions which, when the program is executed by a computer, cause the computer to carry out at least the step (v) of the method of claim 1 or at least the step (vii) of the method of claim 14.

The advantages as mentioned, which are related with the method as claimed in claim 1 and the developments thereof are also related with the method as claimed in claim 14.

Also said advantages in analogy contribute to the subject matter of the system as claimed in claim 11 and the developments thereof and respectively the above mentioned data processing system and the above mentioned computer program.

In particular also, it holds for the system and the data processing system and the computer program that the above mentioned first case, wherein the test result approves the gas- and/or humidity-tight containment-property, and the above mentioned second case, wherein the test result disapproves the gas- and/or humidity-tight containment-property, can be used with correlating the test result with the quality parameter of the product alone or in combination.

In particular with regard to the system and the data processing system and the computer program it is already of advantage that correlating the test result with the quality parameter of the product is available in that in the case the test result approves the gas- and/or humidity-tight containment-property, the threshold of a quality parameter of the product are confirmed, optionally also the certified set of quality features of the packing are confirmed. According to the concept of the invention it is preferably sufficient in that the test result approves the gas- and/or humidity-tight containment-property and the threshold of a quality parameter of the product are confirmed, optionally also the certified set of quality features of the packing are confirmed. In that case it may not be necessary to consider to disapprove the gas- and/or humidity-tight containment-property or disconfirm the threshold of a quality parameter of the product, optionally also to disconfirm the certified set of quality features of the packing.

These and other aspects of the invention will be apparent from and elucidated with reference to the embodiments described hereinafter with reference to the enclosed drawings. The embodiments of the invention are described in the following on the basis of the drawings in comparison with the state of the art, which is also partly illustrated. The latter is not necessarily intended to represent the embodiments to scale. Drawings are, where useful for explanation, shown in schematized and/or slightly distorted form. With regard to additions to the lessons immediately recognizable from the drawings, reference is made to the relevant state of the art. It should be borne in mind that numerous modifications and changes can be made to the form and detail of an embodiment without deviating from the general idea of the invention. The general idea of the invention is not limited to the exact form or detail of the preferred embodiment shown and described below or to an object which would be limited in comparison to the object claimed in the claims. For specified design ranges, values within the specified limits are also disclosed as limit values and thus arbitrarily applicable and claimable.

### BRIEF DESCRIPTION OF THE DRAWINGS

Further advantages, features and details of the invention result from the following description of the preferred embodiments as well as from the drawings. In the following, a summary of the figures is given, wherein it is shown in
- FIG. 1: a flow chart of a preferred embodiment of the method according to the invention for monitoring and approving a quality of a product provided with a product-package;
- FIG. 2: a scheme of an exemplary embodiment of the system according to the invention for monitoring and approving a quality of a product provided with a product-package, wherein the system is adapted to execute the method as shown in FIG. 1.

### DETAILED DESCRIPTION OF THE DRAWINGS

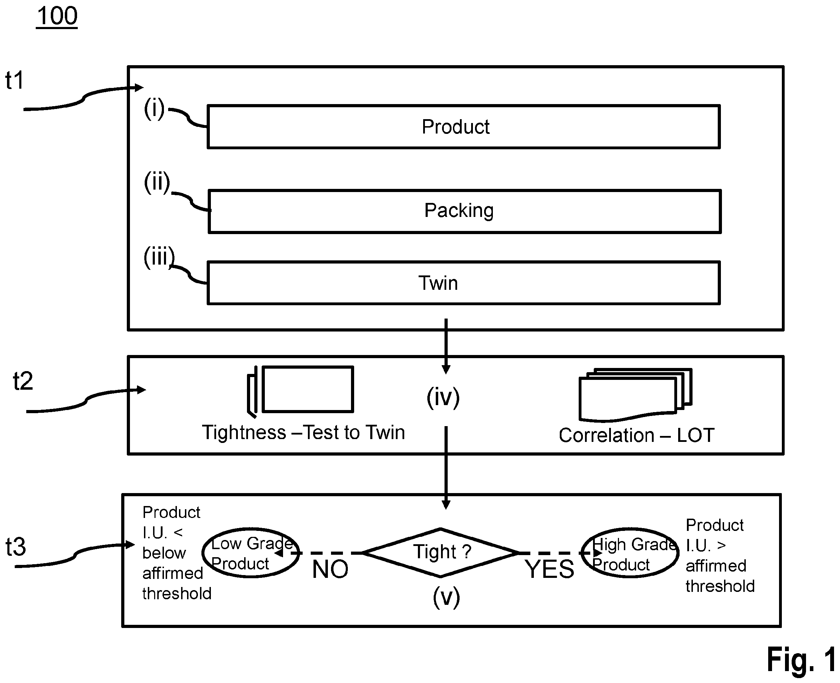

The method 100 as shown in the embodiment of FIG. 1 is adapted for monitoring and approving a quality of a product provided with a product-package. The product as shown in step (i) comprises a nutrition-supplementary composition and is provided as a particulate material.

Whereas a variance of a quality parameter of the nutrition-supplementary composition might be acceptable in general, still nevertheless a slight or even severe degradation of a functionally active portion of the nutrition-supplementary composition cannot be accepted. Both have to be considered as a clear hint to an inferior product quality as both may severely affect the functional effect of a functionally active portion of the nutrition-supplementary composition in the product. A functionally active portion of the nutrition-supplementary composition can in form of an agent or the like relevant ingredient or additive to the nutrition-supplementary composition.

Thus, it becomes a problem of considerable extent when said product-package has been delivered to the customer or even already is in use at the customer respectively has been inoculated by a human being or an animal when consuming the nutrition-supplementary composition with the food. In those cases, a recall of the product-package or product cannot be an option but on the other hand a severe impact to the customer or consumer might not be avoided in extreme cases.

In the method 100 as shown in the embodiment of FIG. 1 the product-package has a packing as shown in step (ii) of the method 100. The packing comprises a foil based packing means with a set of foils and a closure in form of a weldseam at least at one location of the foil based packing means adapted such that the product is contained as a content in the packing. The set of foils of the packing means is formed as a composite layered laminate with the weld seam, such that the product is contained as the content in the packing in a gas- and/or humidity-tight manner.

It has been found that content values or another kind of quality parameter assigned to the functionally active portion of the nutrition-supplementary composition in the product, may degrade due to hidden effects. This causes a problem because hidden effects are not apparent or at least difficult to observe. For instance, the degrading content of a functionally active portion of the nutrition-supplementary composition can be a consequence of extreme temperature, pressure or exposure to radiation, which affects the packing in a non-obvious manner.

However, an exposure to air of the enclosures in the packing severely effects degrading of the functionally active portion like an agent or the like relevant ingredient or additive of the nutrition-supplementary composition. Air or oxygen in the packing may severely accelerate a degradation of the functionally active portion by way of an oxidation process or reaction between the functionally active portion with oxygen.

The impact of this kind of exposure or sneaking but continuing process which are detrimental to the functional effect of a functionally active portion of the nutrition-supplementary composition in the product or the like product quality are even more dominant in hazardous environment or global climate zones like in very cold or tropical climate zones; these kind of environment has to be observed when setting storage conditions and monitoring of the product during the shelf-life of the product-package.

As an example, it can be assumed that Vitamin A additives to a nutrition undergo an instant reaction with oxygen or air and thus severely degrade the activity of said functional portion of the nutrition-supplementary composition.

It might be that with more or less sophisticated measurement methods such degradation can be measured, for instance, by way of measuring the content or fraction of degradation products as the result of said degradation reaction. Such measurement to the substance of product however may be applied only with considerable effort and impact to the product-package as such. Further the degradation might be minor but still the effect to the degradation can be severe. Thus the measurement efforts would have to be sophisticated.

For instance, the content of a functionally active portion of the nutrition-supplementary composition is measured in terms of industrial units "I.U." and relevant values guaranteed as embracing a sufficient content are in the range of 1 million i.e. - deviations thereof in the range of % or even ‰ might be sufficient to have a severe impact on the functionality of said active portion like an agent, ingredient or additive to the product of a nutrition-supplementary composition in the product.

Thus, according to the concept of the invention in step (i) of the method 100 at said above mentioned service time t1, the product is provided in a product-package with at least a threshold of a quality parameter assigned to the functionally active portion of the nutrition-supplementary composition in the product at a determined initial period assigned to the service time of the product-package.

Further in said above mentioned step (ii) of the method 100 at the service time t1, the packing of the product in the product-package is provided with certified set of quality features at the determined initial period assigned to the service time of the product-package.

### An EXAMPLE is given below:

### EXAMPLE - product-package

| **Probe#** | **Batch#** | **Analysis#** | **Meanvalue [I.U.]** | Δ **[%] 1Mio1** |
|---|---|---|---|---|
| 1 | xxxxx | a, b, c | 1091419 | +9.1% |
| 2 | yyyyy | a, b, c | 1010825 | +1.1% |
| 3 | zzzzz | a, b, c | 926272 | -0.07% |

The **EXAMPLE** shows that given the analysis of three tests a, b, c of a certain probe in a specified batch reveals a deviation above or below the guaranteed content of Vitamin A as a content of a functionally active portion of the nutrition-supplementary composition.

As outlined above, the product as such usually is provided with a guaranteed content or other kinds of quality parameters which fulfil certain margins and thresholds of the content. Also another kind of quality parameter can be set such that the functionally active portion of the nutrition-supplementary composition in the product is guaranteed at the service time and after shelf-life up to to a certain expiry date. It is of vital importance that the product has the guaranteed characteristics and properties based on the guaranteed quality parameter like the content of a functionally active portion of the nutrition-supplementary composition until the expiry date.

Correspondingly, also the packing -like a composite layered laminate-- and any kind of means - like a weld seam-- related therewith is provided at the date of service time according to guaranteed specifications.

An example for instance are specifications related with a product-side plastic laminate layer and a metal laminate layer formed as a barrier layer in a composite layered laminate. The metal laminate layer often is provided as an aluminum barrier layer. A barrier layer has to fulfill in the packing certain specifications of gas- and/or humidity-tight properties. Thus, in general, a provider for a product-package can reliably assume that the product as also the packing suffices those specifications for said functionally active portion of the nutrition-supplementary composition. Those properties of the packing are meant to guarantee sufficiently gas- and/or humidity-tight containment properties.

As an example, a packing specification might contain not only dimensions of a packing, but also may guarantee material content and purity of the materials based on standardized test methods. Other properties of the packing may specifically relate to a set of foils including the layer thickness of each foil in the laminate of the set of foils. Usually, the layer thickness of a foil is in the range of 10⁻¹ to 10⁻³ of a mm.

Those properties may also specify that an inner foil has certain surface conditions in touch with the product and.

The foils may be specified with regard to resistance against fissures or breaking according to standards of the European Union or the U.S. standardized rules for instance; generally depending on the market. Resistance values might be specified in terms of force or weight per length or area of a foil, depending on the standardized specification assigned to the foil of certain tightness.

Also a weldseam can be subject of similar specifications and specifications of tightness, so to speak to define a packing of specified resilience and durability for a shelf-life time according to a defined expiration date.

A first example of a packing embodiment is to provide a pouch or the like packing as an intermediate packing means - for example as a block bottom bag of an aluminum composite three layer set of foils, wherein the aluminum barrier layer has a specified thickness and conductivity. A second example of a packing embodiment to provide a pouch or the like packing for a product-package is a corrugated hose - for example a hose of a three-foil set with an aluminum composite layer in the range of 150 µm thickness.

In addition, the provider of a product-package will have qualified production and packing procedures, in particular to reliably seal the product-package with the product being accommodated in the packing. More specifically, the product provider will have a certified technical and production procedure to reliably establish the weldseam to the packing such that the product is contained as the content in the packing in a gas- and/or humidity-tight manner.

It turns out that according to the concept of the invention, at the initial period assigned to the service time t1 and as shown in step (iii) of the method 100, it is advantageous to provide a twin-packing with a twin-weldseam for a twin-package each of the same and/or corresponding kind as the packing with the weldseam of the product-package.

In other words, a twin of the packing which has been used for the product-package is provided as a twin-packing at the initial period assigned to the service time t1. The twin-packing may be provided with the twin-weldseam; so to speak to have available a perfect twin of the packing with weldseam which has been used for the product-package. This measure allows to assess the twin-packing as to the quality parameters of the packing at least and thereby to monitor the quality of the packing as such whilst the production of product-packages continues.

More particularly and advantageously, at the initial period assigned to the service time t1 as shown in step (iii) of the method 100, a probe version of the product-package is provided. In other words, in a particularly preferred embodiment, not only the packing as such which has been used for the product-package is provided, but a complete twin of the product-package is provided.

To be specific, the probe version of the product-package constitutes a twin-package of the product-package. The twin-package consists of a twin-packing as outlined above with a twin-weldseam each of the same and/or corresponding kind as the packing with the weldseam of the product-package, but also some product such that the product is contained as the content in the twin-packing of the twin-package in a gas- and/or humidity-tight manner.

In this embodiment, an even more reliable probe version of the product-package is provided as the twin-package and is available for monitoring whilst the production of product-packages continues.

Continuing the above **EXAMPLE** the probe-version of the product-package at the service time t1 gives the same results as the product-package itself.

### EXAMPLE - probe-version of the product-package

| **Probe#** | **Batch#** | **Analysis#** | **Meanvalue [I.U.]** | Δ **[%] 1Mio1** |
|---|---|---|---|---|
| 1 | xxxxx | a, b, c | 1091419 | +9.1% |
| 2 | yyyyy | a, b, c | 1010825 | +1.1% |
| 3 | zzzzz | a, b, c | 926272 | -0.07% |

The **EXAMPLE** shows that given the analysis of three tests a, b, c of a certain probe in a specified batch reveals a deviation above or below the guaranteed content of Vitamin A as a content of a functionally active portion of the nutrition-supplementary composition.

According to the concept of the invention, in step (iv) at a determined later period of probe time t2 after the initial period of service time t1 the gas- and/or humidity-tight containment property of the twin-packing for the twin-package at least is approved.

More specifically, in the very much preferred embodiment outlined above at a determined later period of probe time t2 after the initial period of service time t1 the gas- and/or humidity-tight containment property of the product in the twin-packing of the twin-package is approved.

In step (iv) at the probe time t2, this incident is depicted symbolically as a tightness test to the twin, i.e. the probe-version of the product-package. The result of such tightness test as to the gas- and/or humidity-tight properties of the twin-packing --or, more preferably, the twin-package-- is provided.

Also at the same probe time t2 in step (iv) a correlation value is provided, wherein a correlation between tightness values --so to speak the test result of the tightness test to the twin-- is given and assigned to a measured product quality. An example of a measured product quality is given in the above **EXAMPLE.**

A look-up table is provided comprising an assignment of
- a threshold of a quality parameter of the product in terms of an amount (I.E.) of a functionally active portion of the nutrition-supplementary composition in the product, and
- a containment-property in terms of a tightness pressure and/or stress-resilience parameter (e.g. a value relating a probe force/length at the packing) of the packing.

More specifically, a correlation -depicted as "correlation- LOT" in step (iv) in FIG. 1-- is given between a tightness value for the gas- and/or humidity-tight containment property on the one hand and a measured quality parameter of the product on the other hand. In other words, from laboratory or experiences in the field during production the correlation is based on measurements as to the quality parameter of the product given the conditions of gas- and/or humidity-tight containment properties for the product-package.

According to the concept of the invention for instance a certain content value in terms of I.U. of a functionally active portion of the nutrition-supplementary composition (an agent or other relevant ingredient of the product) --as the one depicted in the above **EXAMPLE--** can be assigned to a certain tightness value of the packing in a look-up table depicted as "correlation- LOT" in step (iv) in FIG. 1. Thereby a correlation between said kind of quality parameter of the product on the one hand and the gas- and/or humidity-tight containment property on the other hand is constituted.

Said correlation look-up table -depicted as correlation- LOT" in step (iv) in FIG. 1-- may be provided in a database or table sheet available for the method according to the concept of the invention.

Said database may be provided in an updated form - according to the concept of the invention the database undergoes a process of ongoing actualization depending on the terms of production, the terms of materials used for the packing, the terms of applying the weldseam and/or the ongoing design of quality parameters assigned by the provider of the functionally active portion of the nutrition-supplementary composition in the product.

Said correlation values also can be adapted for various conditions, in particular for a variety of shelf-life times and environmental aspects thereof. Environmental aspects may relate to temperature, pressure and radiation values of the storage conditions of the product-package for instance.

Said look-up tables for correlation values -depicted as correlation- LOT" in step (iv) in FIG. 1-- may repeatedly be updated and consolidated according to qualified procedures to ensure that the correlation look-up table reflects the realistic situation during production of the product-package.

Continuing the above example for the probe-version of the product-package the quality parameter of the product is correlated with a test result in terms of a gas- and/or humidity-tight containment-property of the twin-packing for the twin-package

### EXAMPLE - probe-version of product-package; content of Vitamin A and result tightness-test and correlation

| **Probe#** | **Batch#** | **Analysis#** | **Meanvalue [I.U.]** | Δ **[%] 1Mio.** | **Tight-Test Cor** |
|---|---|---|---|---|---|
| 1 | xxxxx | a, b, c | 1091419 | +9.1% pos | YES |
| 2 | yyyyy | a, b, c | 1010825 | +1.1% pos | YES |
| 3 | zzzzz | a, b, c | 926272 | -0.07%neg | NO |

The **EXAMPLE** shows that given the analysis of three tests a, b, c of a certain probe in a specified batch reveals a deviation above or below the guaranteed content of Vitamin A as a content of a functionally active portion of the nutrition-supplementary composition - the positive (pos) or negative (neg) outcome of a tightness test is added as a test result.

For a preferred vacuum packing of one of the above mentioned embodiments adapted for a product of nutrition provided with a product-package, a specifically adapted vacuum test box is known from various offers in the market; one of these is referenced in https://www.leak-master.de/ and preferred in the instant exemplifying **EXAMPLE.**

As shown in the **EXAMPLE** this provides a non-restrictive example of a correlation look-up table shown for a certain probe of twin-package assigned to a batch number of product-package. The correlation look-up table correlates a mean value given in terms of I.U. of a content of a functionally active portion of the nutrition-supplementary composition in the product and the relative deviation to the threshold value assigned thereto with the outcome of a tightness test. It becomes clear from the last line of the **EXAMPLE** (probe #3) that the quality parameter of the product is not met for the analysis of the probe. Further, for this probe, it has been confirmed that the probe packing has been inferior, respectively not properly sealed, in the twin-package respectively the twin-packing.

The correlation value of content (quality parameter of the product) on the one hand and sealing/packing property on the other hand as examined for the twin-package according to the concept of the invention can be used to approve a quality of a product provided with a product-package, wherein the product comprises a nutrition-supplementary composition and is provided as a particulate material.

As outlined with step (v) shown with the method 100 in FIG. 1 a statement can be provided on a consolidated basis as to the product-package produced. Said statement can be emitted at a very early time t3 -hereinafter referred as statement time-- t3 during the production procedure, namely at best at a service time t1 as shown in step (i, ii, iii) shown with the method 100.

Thus, with the concept of the invention, latest during the probe time t2 after or at the initial period of service time t1 the product provider is able to identify those product-packagees which are inferior in terms that they do not confirm the quality parameters guaranteed for the product. Thus, therein when the test result is correlated at the very early statement time t3 with the quality parameter of the product a consolidated statement based on the correlation LOT can be provided according to the concept of the invention as shown in step (v) of the method in FIG. 1.

The consolidated statement is given in that
- in the case the test result approves the gas- and/or humidity-tight containment-property (YES) the threshold of a quality parameter of the product are confirmed;
- in the case the test result disapproves the gas- and/or humidity-tight containment-property (NO), the threshold of a quality parameter of the product are disconfirmed.

The consolidated statement is used in the production process as follows:
In the case that for the twin-packing for the twin-package or the twin-package as such the gas- and/or humidity-tight containment-property is approved (YES), the product-package is considered as being of good quality. An approval message can be given or the like follow up measure can be taken in the production process.

In the case that for the twin-packing for the twin-package or the twin-package as such the gas- and/or humidity-tight containment-property is disapproved (NO) the product-package is considered as being of inferior quality. A warning message can be given or the like follow up measure can be taken in the production process.

It is already of advantage that correlating the test result with the quality parameter of the product is available in that in the case the test result approves the gas- and/or humidity-tight containment-property, the threshold of a quality parameter of the product are confirmed, optionally also the certified set of quality features of the packing are confirmed. According to the concept of the invention it is preferably sufficient in that the test result approves the gas- and/or humidity-tight containment-property and the threshold of a quality parameter of the product are confirmed, optionally also the certified set of quality features of the packing are confirmed. In that case it may not be necessary to consider to disapprove the gas- and/or humidity-tight containment-property or disconfirm the threshold of a quality parameter of the product, optionally also to disconfirm the certified set of quality features of the packing.

Alternatively it can be of advantage that correlating the test result with the quality parameter of the product is available in that in the case the test result disapproves the gas- and/or humidity-tight containment-property, the threshold of a quality parameter of the product are disconfirmed, optionally also the certified set of quality features of the packing are disconfirmed.

Also alternatively, the above mentioned first case the test result approves the gas- and/or humidity-tight containment-property and the above mentioned second case the test result disapproves the gas- and/or humidity-tight containment-property can be used with correlating the test result with the quality parameter of the product in combination.

Continuing the above **EXAMPLE** showing that given the analysis of three tests a, b, c of a certain probe in a specified batch.

Solely based on the positive (pos) outcome of the tightness test as a test result for the twin-package a statement ("YES" in FIG. 1) can be made for the product bunch that the specified batch reveals a deviation above the guaranteed content of Vitamin A as a content of a functionally active portion of the nutrition-supplementary composition. An approval message can be given or the like follow up measure can be taken in the production process.

Solely based on the negative (neg) outcome of a tightness test is added as a test result for the twin-package, a statement ("NO" in FIG. 1) can be made for the product bunch in that the specified batch reveals a deviation below the guaranteed content of Vitamin A as a content of a functionally active portion of the nutrition-supplementary composition. A warning message can be given or the like follow up measure can be taken in the production process.

As outlined for the invention, this procedure has significant advantages as compared to contemporary methods of product monitoring. First of all, a consolidated quality statement for the product provided is possible at all. Secondly, such statement is not subject to complicated measurements to the product as such in the product line or the product-packagees in the field or shelf. Thirdly, the procedure according to the concept of the invention is executed on the basis of the actual production parameter which mainly concern the product, the packing and the welding for the product-package.

Thereby not only a monitoring a quality of a product or packing provided with a product-package is possible. Also the concept of the invention allows for approving a quality of the product provided with a product-package based on assessing the gas- and/or humidity-tight containment-property of the twin-packing for the twin-package and providing a test result in view of the correlation LOT.

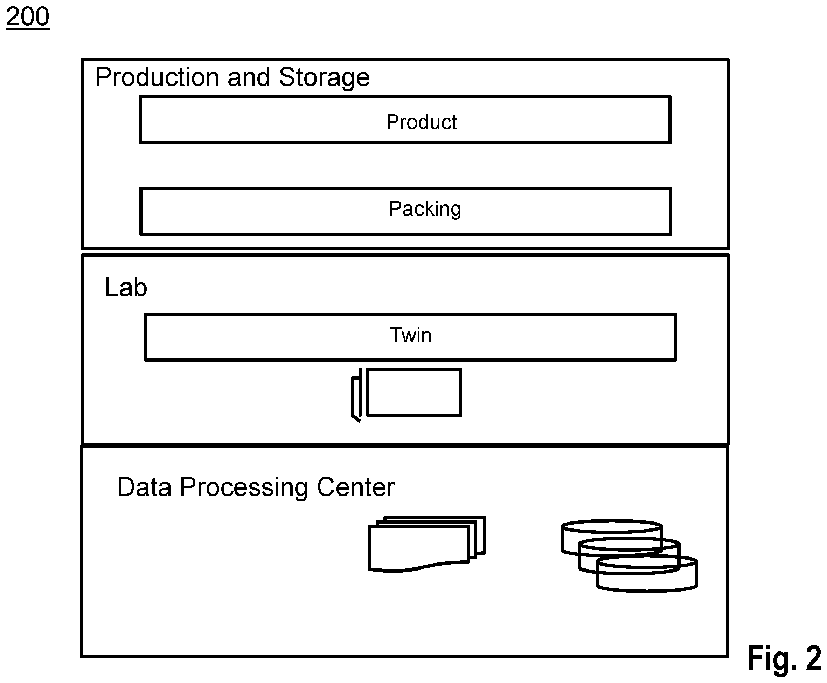

In FIG. 2 a preferred embodiment of a system 200 is shown, which is adapted for monitoring and approving a quality of a product provided with a product-package.

In a production and storage facility according to step (i) of the method the system 200 comprises a first timing means adapted to backup the service time and the initial period assigned to the service time t1. In a production and storage facility according to step (ii) of the method the system 200 comprises second timing means adapted to backup the probe time and the period of probe time t2.

In a laboratory or monitoring facility according to step (iii) of the method the system 200 comprises a twin-packing with a twin-weld seam for a twin-package each of the same and/or corresponding kind as the packing with the weld seam of the product-package.

In a laboratory or monitoring facility according to step (iv) of the method the system 200 comprises a test-apparatus adapted to approving the gas- and/or humidity-tight containment-property of the twin-packing for the twin-package.

Also, the laboratory or monitoring facility, in particular in a data center as shown in FIG. 2, provides for a correlation-means adapted to safe a correlation of the test result with the quality parameter of the product, and an indicator logic unit.

The correlation-means in the a data center as shown in FIG. 2 is adapted in that
- in the case the test result approves the gas- and/or humidity-tight containment-property the threshold of a quality parameter of the product are confirmed;
- in the case the test result disapproves the gas- and/or humidity-tight containment-property, the threshold of a quality parameter of the product are disconfirmed.

### LIST OF REFERENCE SIGNS

- t1: service time
- t2: probe time
- t3: statement time

- (i) .. (v): method steps
- YES, NO: correlation result
- pos, neg: test result

## Claims

1. Method (100) for monitoring and approving a quality of a product provided with a product-package, wherein the product comprises a nutrition-supplementary composition and is provided as a particulate material,
- wherein the product-package has a packing comprising foil based packing means with a set of foils and a closure in form of a weldseam at least at one location of the foil based packing means adapted such that the product is contained as a content in the packing,
- wherein the set of foils of the packing means is formed as a composite layered laminate with the weld seam, such that the product is contained as the content in the packing in a gas- and/or humidity-tight manner, and
- the method for monitoring and approving a quality of a product provided with a product-package comprises the steps of:
(i) at a service time (t1), providing the product in the product-package with at least a threshold of a quality parameter assigned to the functionally active portion of the nutrition-supplementary composition in the product at a determined initial period assigned to the service time of the product-package,
(ii) at the service time (t1), providing the packing of the product in the product-package with certified set of quality features at the determined initial period assigned to the service time of the product-package,
(iii) at the initial period assigned to the service time (t1), providing a twin-packing with a twin-weld seam for a twin-package each of the same and/or corresponding kind as the packing with the weld seam of the product-package
(iv) at a determined later period of probe time (t2) after the initial period of service time, approving the gas- and/or humidity-tight containment-property of the twin-packing for the twin-package and providing a test result,
(v) wherein the test result is correlated (t3) with the quality parameter of the product in that
- in the case the test result approves the gas- and/or humidity-tight containment-property the threshold of a quality parameter of the product are confirmed;
- in the case the test result disapproves the gas- and/or humidity-tight containment-property, the threshold of a quality parameter of the product are disconfirmed.

2. Method of claim 1 wherein
the product consists of the nutrition-supplementary composition which is provided as a bulk of particulate material of a beadlets, globules or pellets or the like particles, and/or the packing consists of the foil based packing means with the closure in form of the weldseam, wherein the product is contained in the packing.

3. Method of claim 1 or 2 wherein the composite layered laminate comprises at least a metal laminate layer and/or at least a plastic or polymer laminate layer, in particular wherein the weldseam is effected with at least the plastic or polymer laminate layer and the metal laminate layer forms a barrier layer.

4. Method of claim 3, wherein
- the metal laminate layer is an aluminum layer, and/or
- the plastic or polymer laminate layer is a PE-Layer, in particular a LD PE-layer and/or a LLD PE-layer; and/or
- the plastic or polymer laminate layer is a Ethylen-Vinylalkohol-Copolymer (EVOH) laminate layer.

5. Method of one or more of the previous claims wherein
- at the initial period assigned to the service time, providing a probe-version of the product-package at the service time, wherein the probe-version of the product-package constitutes a twin-package of the product package, the twin-package consisting of a twin-packing with a twin-weld seam each of the same and/or corresponding kind as the packing with the weld seam of the product-package such that the product is contained as the content in the twin-packing of the twin-package in a gas- and/or humidity-tight manner, and
- at a determined later period of probe time after the initial period of service time, approving the gas- and/or humidity-tight containment-property of the product in the twin-packing of the twin-package and providing a test result.

6. Method of one or more of the previous claims wherein at a determined later period of probe time after the initial period of service time, approving the gas- and/or humidity-tight containment of the product in the twin-packing of the twin-package and providing a test result, in particular wherein by approving the gas- and/or humidity-tight containment of the product in the twin-packing of the twin-package and providing a test result is executed by conducting a leakage-test on the twin-package and providing a leakage-test result.

7. Method of one or more of the previous claims wherein the period of probe time is set during a shelf life and/or period assigned to a delivery time of the product-package.

8. Method of one or more of the previous claims wherein the test result is correlated with the quality parameter of the product and/or the quality features of the packing, wherein
- in the case the test result approves the gas- and/or humidity-tight containment also the certified set of quality features of the packing are confirmed;
- in the case the test result disapproves the gas- and/or humidity-tight containment, the threshold of a quality parameter of the product are disconfirmed, also the certified set of quality features of the packing are disconfirmed.

9. Method of one or more of the previous claims wherein the test result is correlated with the quality parameter of the product in that a look-up table is provided comprising an assignment of
- a threshold of a quality parameter of the product in terms of an amount (I.E.) of a functionally active portion of the nutrition-supplementary composition in the product, and
- a containment-property in terms of a tightness pressure (p) and/or stress-resilience parameter (force/length) of the packaging.

10. Method of one or more of the previous claims wherein the twin-package is a miniaturized bunch, which is produced by proportional downscaling of the threshold of a quality parameter of the product-package.

11. System (200) for monitoring and approving according to a method of one of the previous claims a quality of a product provided with a product-package, wherein the product comprises a nutrition-supplementary composition and is provided as a particulate material,
- wherein the product-package has a packing comprising foil based packing means with a set of foils and a closure in form of a weldseam at least at one location of the foil based packing means adapted such that the product is contained as a content in the packing,
- wherein the set of foils of the packing means is formed as a composite layered laminate with the weld seam, such that the product is contained as the content in the packing in a gas- and/or humidity-tight manner, and
- the system for monitoring and approving a quality of a product provided with a product-package comprises:
(i) - First timing means adapted to backup the service time and the initial period assigned to the service time (t1),
(ii) - Second timing means adapted to backup the probe time and the period of probe time (t2),
(iii) - a twin-packing with a twin-weld seam for a twin-package each of the same and/or corresponding kind as the packing with the weld seam of the product-package
(iv) - test-apparatus adapted to approving the gas- and/or humidity-tight containment-property of the twin-packing for the twin-package and providing a test result,
(v) correlation-means adapted to safe a correlation of the test result with the quality parameter of the product, and an indicator logic unit adapted in that
- in the case the test result approves the gas- and/or humidity-tight containment-property the threshold of a quality parameter of the product are confirmed; and/or
- in the case the test result disapproves the gas- and/or humidity-tight containment-property, the threshold of a quality parameter of the product are disconfirmed.

12. System of claim 11 comprising
- a defect-packing and/or a defect-weld seam for a defect-bunch each of the same and/or corresponding kind as the packing with the weld seam of the product-package and further comprising a predetermined defect means adapted to establish comparative and/or normative example to the twin-package.

13. System of claim 11 or 12 wherein the test-apparatus is a leakage testing device and/or a stress/strength testing device.

14. Method for preparing a quality approved product-package, in particular the method as claimed with the features of one of claims 2 to 10, wherein a product is comprising a nutrition-supplementary composition,
- wherein the product-package has a packing comprising foil based packing means with a set of foils and a closure in form of a weld seam at least at least at one location of the foil based packing means adapted such that the product is contained as a content in the packing,
- wherein the set of foils of the packing means is formed as a composite layered laminate with the weld seam, such that the product is contained as the content in the packing in a gas- and/or humidity-tight manner,
the method comprises:
(i) preparing the product-package by wrapping the product with the set of foils;
(ii) welding the set of foils; (iii) at a service time (t1), providing the product in the product-package with at least a threshold of a quality parameter assigned to the functionally active portion of the nutrition-supplementary composition in the product at a determined initial period assigned to the service time of the product-package,
(iv) at the service time (t1), providing the packing of the product in the product-package with certified set of quality features at the determined initial period assigned to the service time of the product package,
(v) at the initial period assigned to the service time (t1), providing a twin-package with a twin-weld seam for a twin-package each of the same and/or corresponding kind as the packing with the weld seam of the product-package,
(vi) at a determined later period of probe time (t2) after the initial period of service time, approving the gas- and/or humidity-tight containment-property of the twin-packing for the twin-package and providing a test result,
(vii) correlating the test result (t3) with the quality parameter of the product and approving the gas and/or humidity-tight containment-property when the threshold of a quality parameter of the product is confirmed, to obtain the quality approved product-package comprising a nutrition-supplementary composition.

15. A data processing system for use in the method of one of the claims 1 to 10 or claim 14 and/or as being part of the system of one of the claims 11 to 13, the data processing system comprising means for carrying out at least the step (v) of the method of claim 1 or at least the step (vii) of the method of claim 14, in particular said means is a correlation-means adapted to safe a correlation of the test result with the quality parameter of the product, and an indicator logic unit adapted in that
- in the case the test result approves the gas- and/or humidity-tight containment-property the threshold of a quality parameter of the product are confirmed; and/or
- in the case the test result disapproves the gas- and/or humidity-tight containment-property, the threshold of a quality parameter of the product are disconfirmed.

16. A computer program for use in the method of one of the claims 1 to 10 or claim 14 and/or as being part of the system of one of the claims 11 to 13, the computer program comprising instructions which, when the program is executed by a computer, cause the computer to carry out at least the step (v) of the method of claim 1 or at least the step (vii) of the method of claim 14.
